# EUROPÄISCHE PATENTSCHRIFT

(11) **EP 1 266 180 B1**
(45) Veröffentlichungstag und Bekanntmachung des Hinweises auf die Patenterteilung: **05.10.2005**
(21) Anmeldenummer: 01903683.9
(22) Anmeldetag: 31.01.2001
(51) Int. Cl.: F24F 13/12, F24F 12/00, F24F 13/28

(54) **LÜFTUNGSVORRICHTUNG**
VENTILATING DEVICE
DISPOSITIF D'AERATION

(30) Priorität: 21.03.2000 DE 10013689; 21.03.2000 DE 10013691
(43) Veröffentlichungstag der Anmeldung: 18.12.2002
(73) Patentinhaber: SIEGENIA-AUBI KG, 57234 Wilnsdorf (DE)
(72) Erfinder: BITTCHER, Markus, 57223 Kreuztal (DE); BOTTLÄNDER, André, 57462 Olpe (DE); WEGMANN, Dieter, 57299 Burbach (DE)
(86) Internationale Anmeldenummer: PCT/EP2001/000998
(87) Internationale Veröffentlichungsnummer: WO 2001/071262

(56) Entgegenhaltungen:
- DE-A- 3 208 392
- DE-A- 4 447 135
- DE-A- 19 539 811
- DE-C- 19 637 564
- GB-A- 2 308 439
- US-A- 3 659 515
- US-A- 5 062 352
- US-A- 5 399 120
- PATENT ABSTRACTS OF JAPAN vol. 1999, no. 09, 30. Juli 1999 (1999-07-30) -& JP 11 118236 A (NIPPON ALUM CO LTD), 30. April 1999 (1999-04-30)
- PATENT ABSTRACTS OF JAPAN vol. 016, no. 187 (M-1244), 7. Mai 1992 (1992-05-07) -& JP 04 024466 A (MITSUBISHI ELECTRIC CORP), 28. Januar 1992 (1992-01-28)
- PATENT ABSTRACTS OF JAPAN vol. 1995, no. 01, 28. Februar 1995 (1995-02-28) -& JP 06 300354 A (KAJIMA CORP;OTHERS: 01), 28. Oktober 1994 (1994-10-28)

## Beschreibung

Gegenstand der Erfindung ist eine Lüftungsvorrichtung nach dem Oberbegriff des Anspruchs 1.

Lüftungsvorrichtungen dieser Art sind bereits bekannt, beispielsweise aus der DE 297 04 633 U1. Dabei ist vorgesehen, dass in einem Gehäuse der Lüftungsvorrichtung zwei Lüftungskanäle ausgebildet werden, die im wesentlichen getrennt voneinander eine Gebäudeinnenseite mit einer Gebäudeaußenseite verbinden.

In jedem Lüftungskanal ist dabei eine Zwangslüftungsvorrichtung in Form eines Lüfterrades und ein oder mehrerer Schließvorrichtungen zur Bestimmung und Einstellung verschiedener Be- bzw. Entlüftungsstellungen vorgesehen.

Ferner ist ein Wärmetauscher in dem Gehäuse angeordnet, der - abhängig von der Stellung der Schließvorrrichtung - von den durch die Lüftungskanäle hindurchgeführten Volumenströmen beaufschlagt wird.

Die Schließvorrichtungen bestehen dabei aus verstellbaren Klappen oder Schiebern, die in dem jeweiligen Lüftungskanal angeordnet sind.

Dabei ist u. a. vorgesehen, dass die Klappen oder Schieber so einstellbar sind, dass in einer bestimmten Lüftungsstellung - einem sogenannten Sommerbetrieb - die Lüftungskanäle nicht den Wärmetauscher beaufschlagen, also an diesem vorbeigeführt werden.

Nachteilig ist es dabei, dass die vorgeschlagene Ausgestaltung mit Klappen oder Schieber relativ aufwendig zu handhabende Steuerelemente vorschlägt, da derartige Schließvorrichtungen nur mit großem Aufwand die notwendige Dichtigkeit erreichen können und auch über elektrische Antriebe nur mit unverhältnismäßig großem Aufwand regelbar sind. Es liegt u. a. darin, dass die Motoren bei Klappen beispielsweise ihn zwei Richtungen wirksam bewegbar sein müssen, was derartige Motoren deutlich verteuert und darüber hinaus auch platzaufwendig ist.

Aus der EP 0 816 769 A2 ist beispielsweise eine Ausgestaltung bekannt geworden, bei der ebenfalls über eine Schließvorrichtung der Betriebszustand der Lüftungsvorrichtung änderbar ist. Dabei ist vorgesehen, dass ein Teilstück einer gemeinsamen Wandung aus einer in ihrer Umrißform auf den lichten Gesamtquerschnitt beider Strömungskanäle abgestimmten Schwenkklappe besteht. Die Schwenkklappe ist dabei in der Ebene der gemeinsamen Wandung gelagert und kann in eine Querlage gebracht werden, in der einerseits die ursprünglichen Lüftungskanäle unterbrochen und andererseits die durch die gemeinsame Wandung gebildete Unterbrechung aufgehoben werden kann, so dass die Lüftungskanäle verbunden sind.

Die US-A-5 062 352 offenbart den Oberbegriff des Anspruchs 1.

Ausgehend von dem bekannten Stand der Technik wird eine Lüftungsvorrichtung gesucht, die eine möglichst einfache Gestaltung der Schließvorrichtung ermöglicht, die den Erfordernissen bezüglich der Dichtigkeit und der universellen Handhabbarkeit genügt und selbst möglichst einfach und zugleich wirkungsvoll ausgestaltet ist.

Diese Lüftungsvorrichtung wird im wesentlichen durch die in dem kennzeichnenden Teil des Anspruchs 1 angegebenen Merkmale geschaffen.

Die Schließvorrichtung kann dadurch im wesentlichen aus einfach herzustellenden Rohrabschnitten bestehen, in die Öffnungen, beispielsweise durch Stanzen od. dgl. kostengünstig eingebracht werden können. Eine zusätzliche Lagerung der Rohrabschnitte ist dabei nicht notwendig, da der äußere Rohrabschnitt den inneren drehbeweglich aufnimmt. Zwar sind schon aus dem Stand der Technik Lüftungsvorrichtungen bekannt geworden, bei denen zylindrische Verschlusselemente zum Einsatz gelangt sind (z.B. EP 0 406 933 B1). Dabei ist aber jeweils nur vorgesehen, dass eine einzige Öffnungs- und Verschlussstellung erreicht wird und gleichzeitig die Lagerung des beweglichen zylindrischen Verschlussgliedes an den Längsenden erfolgt. Dadurch bedingt, kann insbesondere bei großen Abmessungen des zylindrischen Stellgliedes eine unerwünschte Formänderung durch Durchbiegung erfolgen, welche die Bedienbarkeit und die Dichtigkeit der gesamten Schließvorrichtung beeinträchtigt.

Die DE-A-3 208 392 offenbart ein Lüftungsgerät mit Dammstoffkörpern.

Bei der vorgeschlagenen Lösung ist durch die Lagerung über die gesamte Länge des inneren Rohrabschnitts in dem äußeren Rohrabschnitt hingegen eine irgendwie geartete Verformung der Schließglieder nicht möglich, so dass diese aus vergleichsweise dünnem Material herstellbar sind.

Während die bislang beschriebene Lüftungsvorrichtung nur einen einzigen Lüftungskanal benötigen, soll nach einer Weiterbildung eine Lüftungsvorrichtung zwei Lüftungskanäle ausbilden und ein Wärmetauscher vorgesehen sein. Eine derartige Lüftungsvorrichtung lässt sich insbesondere dadurch einfach und zugleich wirkungsvoll ausgestalten, dass der Wärmetauscher mittig zwischen zwei identische je eine Schließvorrichtung vomehmende Dämmstoffkörper angeordnet ist. Dadurch wird die Anzahl der benötigten Dämmstoffkörper erhöht, was die Herstellkosten aufgrund der größeren Stückzahl und den Werkzeugaufwand reduziert.

Es kann vorgesehen werden, dass der äußere Rohrabschnitt durch ein in dem Gehäuse zu befestigendes Rohr gebildet wird. Dadurch kann die Auswahl der Materialien einerseits des Gehäuse und andererseits der durch die Rohrabschnitte gebildeten Schließglieder unabhängig von der notwendigen Möglichkeit der Relativverlagerung des inneren und des äußeren Rohrabschnitts relativ zueinander erfolgen. In Folge dessen kann das Gehäuse beispielsweise aus einem schall- und wärmeisolierenden Werkstoff hergestellt werden, während die Rohrabschnitte im Bezug auf Festigkeit, Reibung und Verschleiß sowie Herstellkosten optimal ausgelegt werden können.

Eine Weiterbildung der Lüftungsvorrichtung sieht vor, dass die Achse der Rohrabschnitte im wesentlichen längs der Förderrichtung der Lüftungsvorrichtung liegt, wobei die Förderrichtung innerhalb des Gehäuses im wesentlichen quer dazu verläuft. Dadurch wird der entlang der Lüftungskanäle geführte Volumenstrom zumindest einmal um 90° umgelenkt, was sich im Bezug auf die Schalldämmung der Lüftungsvorrichtung positiv auswirkt.

Dies kann zusätzlich dadurch noch gesteigert werden, dass der äußere Rohrabschnitt in einem Dämmstoffkörper aufgenommen ist.

Ferner ist vorgesehen, das die Längsenden des äußeren Rohrabschnitts mit Kappen verschlossen sind, die mittels bajonettartiger Verschlüsse befestigt sind. Dadurch lassen sich einerseits die Rohrabschnitte an den Längsenden zuverlässig abdichten und können andererseits auf einfache Art und Weise beispielsweise zu Reinigungszwecken od. dgl. geöffnet werden.

Dabei kann auch vorgesehen werden, dass in den Rohrabschnitten ein Filterelement aufgenommen ist. Dadurch dient der Rohrabschnitt nicht nur zur Realisierung der Stellvorrichtung sondern gleichzeitig als Gehäuse zur Aufnahme des Filterelementes, was zur kompakten Unterbringung und Bauweise beiträgt. Besonders zweckmäßig ist dabei eine Ausgestaltung, bei der das Filterelement an der Kappe befestigt ist. Da die Kappe lösbar an dem Rohrabschnitt angeordnet ist kann auf diese Weise das Filterelement zu Reinigungsarbeiten oder zum Austausch zusammen mit dieser aus der Lüftungsvorrichtung entfernt werden.

Dazu ist es naturgemäß auch von Vorteil, wenn die den Filter tragende Kappe zur Gebäudeinnenseite weist, so dass das Austauschen oder das Warten des Filterelementes von der Rauminnenseite her erfolgen kann.

Um einen möglichst einfachen Aufbau der Schließvorrichtung zu gewährleisten ist an dem inneren Rohrabschnitt endseitig eine drehfest mit dem Rohrabschnitt verbundene Kappe vorgesehen, die mit einem Stellantrieb verbunden ist. Der Stellantrieb wirkt also mittelbar über die Kappe auf den inneren Rohrabschnitt, so dass das Anbringen von zusätzlichen Mitnehmern an den Rohrabschnitt od. dgl. entfallen kann, da die den Rohrabschnitt abdichtende Kappe die Bewegung des Stellantriebes überträgt.

Zweckmäßig ist dabei auch die Ausgestaltung, dass die Antriebsvorrichtung an der Kappe des äußeren Rohrabschnitts befestigt ist. Der äußere Rohrabschnitt ist dabei ortsfest in dem Gehäuse aufgenommen, so dass ein Verdrehen des Rohrabschnitts vermieden wird.

Eine besonders einfache Ausgestaltung sieht dabei vor, dass der Stellantrieb elektrisch betrieben ist und auf den Kappen Hallsensoren zur Kennzeichnung der Stellung des Rohrabschnitts angebracht sind. Dadurch läßt sich die Stellvorrichtung in einfacher Art und Weise mittels Elektromotoren realisieren und auch vergleichsweise kostengünstig steuern. Die Hallsensoren sind dabei aufgrund ihrer Ausgestaltung verschleißfrei und zuverlässig in ihrer Wirkung. Dabei ist es noch von besonderem Vorteil, dass durch die kontaktlosen Riegelkontakte die elektrisch angetriebenen Stellantriebe sich jeweils in nur einer Richtung bewegen müssen, also beispielsweise nur im Uhrzeigersinn drehen. Dadurch können die Stellantriebe wesentlich einfacher und kostengünstiger ausgelegt werden als dies beispielsweise bei Stellantrieben möglich wäre, die in zwei Richtungen bewegbar sein müssen.

Dabei ist es selbstverständlich nötig, dass die Stellvorrichtung an die zwei Lüftungskanäle angepasst wird, so dass sich weitere Be- und Entlüftungsstellungen dadurch ergeben, dass der äußere Rohrabschnitt vier Öffnungen aufweist, von denen sich bezüglich der Drehachse einander längsverschoben und zwei Öffnungen senkrecht zur Drehachse gegenüberliegen. Dadurch ist es möglich, mit nur einer einzigen Stellvorrichtung gleichzeitig zwei Lüftungskanäle in einfacher Art und Weise zu handhaben. Die paarweise sich gegenüberliegenden Öffnungen bewirken dabei jeweils ein gleichzeitiges Öffnen bzw. Schließen einer durch die Lage der Öffnungen definierten Be- bzw. Entlüftungsstellung und durch die längs der Drehachse verschobenen Öffnungen ist es zudem möglich, verschiedene Zu- bzw. Abluftkanäle in dem Gehäuse auszubilden.

Besonders zweckmäßig ist es dabei, wenn bei einer derartigen Lüftungsvorrichtung der innere Rohrabschnitt vier Öffnungen aufweist, von denen sich jeweils zwei bezüglich der Drehachse Öffnungen längsverschoben und zwei senkrecht zur Drehachse Öffnungen bezüglich der Drehachse gegenüberliegen. Dadurch werden in mindestens zwei Schaltstellungen über Kreuzverbindungen der an dem äußeren Rohrabschnitt angebrachten vier Öffnungen möglich und zugleich zumindest in einer Schaltstellung zwei sich gegenüberliegende Öffnungen des äußeren Rohrabschnitts miteinander verbunden.

Besonders zweckmäßig ist es auch, wenn der Wärmetauscher im wesentlichen Gförmig durchströmt wird und die Dämmstoffkörper jeweils um 180° geschwenkt an dessen Längsenden eingeflanscht sind. Durch die C-förmige Anordnung des Wärmetauschers wird die Relativlage der Lüftungskanäle bezüglich der angeflanschten und um 180° geschwenkten Dämmstoffkörper ebenfalls um 180° wechseln,

Ferner ist vorgesehen, dass die Dämmstoffkörper, mit Ausnahme einer querverlaufenden Bohrung zur Aufnahme der Rohrabschnitte, eine längsverlaufende Trennwand aufweisen. Dadurch wird einerseits die Beibehaltung der getrennten Luftkanäle in den Dämmstoffkörpern erreicht andererseits aber auch die mögliche Führung der Volumenströme in unterschiedliche Lüftungskanäle innerhalb der querverlaufenden Bohrung unter unterschiedlichen Stellungen der Rohrabschnitte gewährleistet.

Es ist weiterhin zweckmäßig, wenn der Dämmstoffkörper zwei nebeneinanderliegende Aufnahmen für Gebläseräder aufweist, die in einer flachen Mulde des Dämmstoffkörpers liegen, wobei die Gebläseräder auf einer in der Mulde eingebetteten Platte befestigt sind. Dadurch können einerseits jedem Lüftungskanal ein Gebläserad zugeordnet werden, die aber gemeinsam auf einer als Träger wirkenden Platte montiert sind, die wiederum - von der flachen Mulde des Dämmstoffkörpers aufgenommen - zum einen vibrationsarm und somit wenig Eigengeräusche verursachend auf einfache Art und Weise ohne über den Dämmstoffkörper überzustehen montiert werden kann.

Eine weitere Trennung der Lüftungskanäle lässt sich dadurch bewirken, dass in eine der Aufnahmen für die Gebläseräder in einen vorragenden und querverlaufenden Auslass mündet. Somit kann zumindest eines der Gebläseräder unmittelbar mit dem auf der Gebäudeaußen- bzw. Innenseite vorhandenen Raum kommunizieren. Wirkt das Gebläserad also beispielsweise in Richtung des querverlaufenden Auslasses fördernd, so ist dass Gebläserad im wesentlichen freiblasend, da kein Druck innerhalb des Gehäuses durch Filter oder Wärmetauscher verursacht, zu überwinden ist. Dies begründet einen wesentlich größeren Wirkungsgrad der Gebläseräder.

Gleichzeitig sind dabei alle anderen Komponenten der Lüftungseinrichtung, wie Filterelemente saugseitig angebracht, was einen gleichmäßigen Durchfluss dieser Komponenten bewirkt.

Eine Weiterbildung sieht vor, dass der Dämmstoffkörper und Wärmetauscher in einem Gehäuse angeordnet sind und dass das Gehäuse endseitig und mittig angebrachte Lüftungsschlitze aufweist, wobei die mittig angebrachten Lüftungsschlitze dem Auslass zugeordnet sind. Somit sind die Einlass- bzw. Auslassöffnungen der Lüftungskanäle gehäuseseitig in einem möglichst großen Abstand voneinander angebracht.

Schließlich betrifft die Erfindung auch ein Verfahren zum Betrieb einer Lüftungsvorrichtung mit zwei Lüftungskanälen und einer Wärmetauscheinrichtung, wobei in einer ersten Belüftungsstellung die Lüftungskanäle über den Wärmetauscher geführt werden (Winterstellung), dass in einer zweiten Belüftungsstelle die Lüftungskanäle nach außen abgesperrt werden (Umluftstellung) und in einer dritten Belüftungsstellung die Lüftungskanäle an dem Wärmetauscher vorbeigeführt werden (Sommerstellung). Dadurch wird erreicht, dass die Teile der Lüftungsvorrichtung, die nicht benötigt werden von den Lüftungskanälen bzw. dem darin geförderten Volumenstrom nicht beaufschlagt werden und - dass falls notwendig - eine Außenabschottung stattfindet, in der keine Frischluft von außen zugeführt wird.

Ferner ist bei einem derartigen Verfahren vorgesehen, dass die Schließvorrichtungen synchron bewegt werden. Dadurch lässt sich sicherstellen, dass die gewünschten Lüftungskanäle jeweils auf der gesamten Länge der Lüftungsvorrichtung durchströmt werden können.

Weitere Ausführungsbeispiele ergeben sich aus den Figuren.

Es zeigen
- Fig. 1: eine Lüftungsvorrichtung ohne Gehäuse,
- Fig. 2: eine Stellvorrichtung für eine Lüftungsvorrichtung in einer Explosionsdarstellung,
- Fig. 3: eine Stellvorrichtung im montierten Zustand,
- Fig. 4: einen Dämmkörper mit darin anbringbaren Komponenten der Lüftungsvorrichtung in einer Explosionsdarstellung,
- Fig. 5: eine schematische Darstellung der Lüftungskanäle der Lüftungsvorrichtung in einer ersten Be- und Entlüftungsstellung (Winterstellung),
- Fig. 6: eine Lüftungsvorrichtung nach Fig. 5 in einer zweiten Lüftungsstellung (Umluft),
- Fig. 7: die Lüftungsvorrichtung nach Fig. 5 und 6 in einer dritten Lüftungsstellung (Sommerstellung) und
- Fig. 8: die Lüftungsvorrichtung mit Gehäuse.

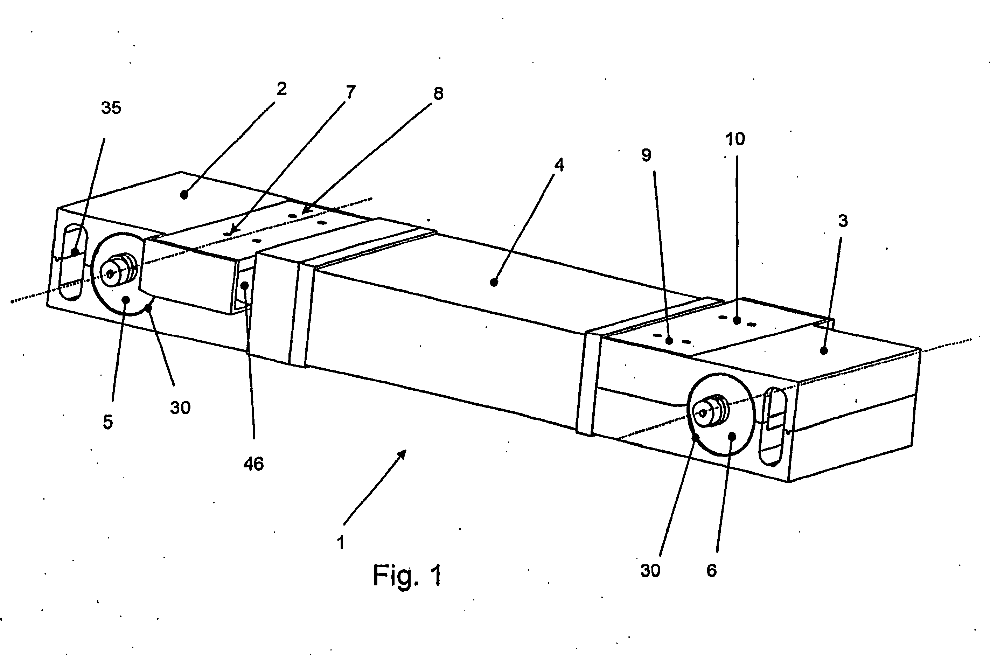

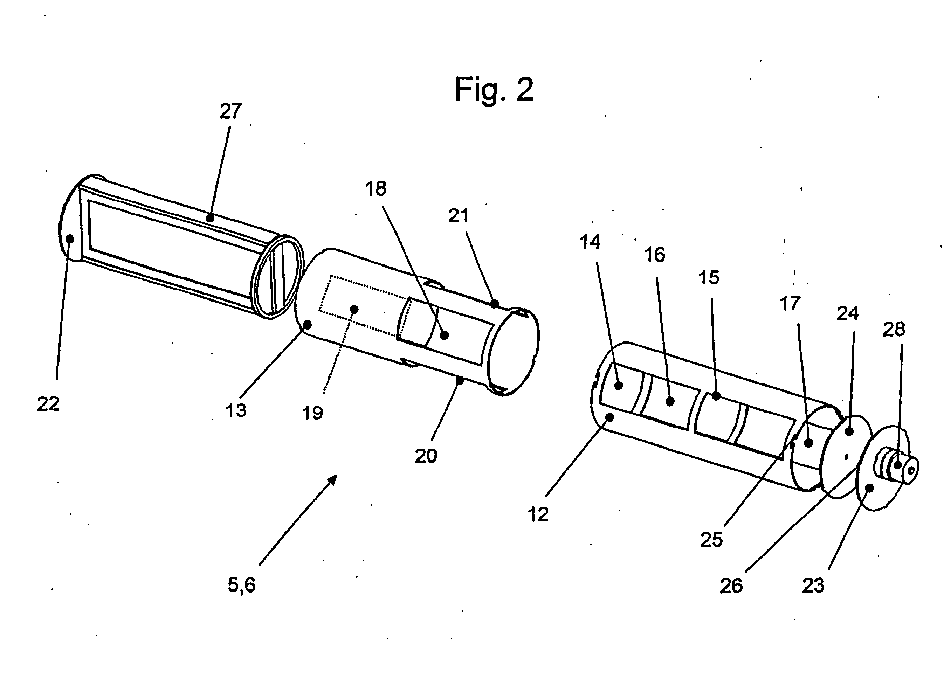

Fig. 1 zeigt die Lüftungsvorrichtung 1 bestehend aus den Dämmstoffkörpem 2, 3 sowie einem zwischen diesem angeordneten Wärmetauscher 4. In den Dämmstoffkörpern 2, 3 sind Schließvorrichtungen 5, 6 sowie Gebläseräder 7, 8, 9, 10 vorgesehen. In Fig. 1 nicht dargestellt ist, dass die Lüftungsvorrichtung 1 umgebende Gehäuse. Die Schließvorrichtungen 5, 6 weisen im wesentlichen den in Fig. 2 dargestellten Aufbau auf. Ein äußerer Rohrabschnitt 12 ist in seinem Innendurchmesser so ausgelegt, dass ein innerer Rohrabschnitt 13 in Längsrichtung darin einführbar ist. Der äußere Rohrabschnitt 12 weist vier Öffnungen 14, 15, 16, 17 auf, die sich jeweils paarweise und längs der Mittelachse des Rohrabschnitts 12 längsverschoben in einer Ebene angeordnet gegenüberliegen. Dadurch sind die Öffnungen 14, 15 unmittelbar nebeneinanderliegend ebenso wie die Öffnungen 16 und 17. Sie liegen sich bezüglich der Mittelachse diametral gegenüber. Der äußere Rohrabschnitt 12 bildet mit seinem darauf abgestimmten Innendurchmesser die Lagerung des inneren Rohrabschnitts 13, der seinerseits vier Öffnungen aufweist. Zwei der Öffnungen sind dabei bezüglich der die Drehachse bildenden Längsmittelachse des Rohrabschnitts seitlich zueinander versetzt angeordnet, während zwei weitere Öffnungen 20, 21 winkelverschoben zu dem ersten Öffnungspaar sich bezüglich der Drehachse unmittelbar gegenüberliegen. Ferner ist bei der Schließvorrichtung 5, 6 vorgesehen, dass die Längsenden der Rohrabschnitte 12, 13 mit Kappen 22, 23 und 24 verschlossen werden können. Die Kappen 22, 23 dienen dabei zum Verschließen des äußeren Rohrabschnitts 12 und werden über einen bajonettartigen Verschluss 25, 26 gegeneinander verriegelt. Der bajonettartige Verschluss besteht dabei im wesentlichen aus einer T-förmigen Öffnung 25 in der Mantelfläche des äußeren Rohrabschnitts 12, die in dem mittigen T-Schenkel randoffen ausgeführt ist. In diese randoffenen Öffnung kann ein von der Kappe 22, 23 vorstehender Steg 26 eingeführt und nach einer Relativdrehung zu dem Rohrabschnitt verriegelt werden.

Die endgültige Fixierung kann beispielsweise mittels Klebstoff od. dgl. erfolgen, es kann aber auch ggf. eine Rastschnappverbindung vorgesehen werden. Die Kappe 22 ist in jedem Fall lösbar an dem äußeren Rohrabschnitt 12 angebracht und trägt zu dem einen Rahmen 27, dessen Außenabmessungen im wesentlichen den Innenabmessungen des inneren Rohrabschnitts 13 entsprechen. Dadurch wird die gesamte projizierte Querschnittsfläche des inneren Rohrabschnitts von dem Rahmen 27 abgegrenzt, so dass ein in dem Rahmen 27 angebrachtes - hier nicht dargestelltes - Filterelement von dem durch die Öffnungen 14, 15, 16, 17 hindurchgeführten Volumenstrom nicht umgangen werden kann.

Bei dem dargestellten Ausführungsbeispiel ist vorgesehen, dass der äußere Abschnitt durch ein in dem Gehäuse bzw. dem Dämmstoffkörper 2 zu befestigendes Rohr gebildet wird. Abweichend davon kann aber auch vorgesehen werden, dass der äußere Rohrabschnitt 12 bereits durch den Dämmstoffkörper 2 bzw. das Gehäuse gebildet wird. Dazu ist es notwendig, dass der Außendurchmesser des inneren Rohrabschnitts 13 zur Bildung der Lagerung in einer entsprechend dimensionierten Bohrung des Gehäuses bzw. des Dämmstoffkörpers 2, 3 eingeführt werden kann. In dem Fall ist auch die Anordnung der Öffnungen 14, 15, 16, 17 in dem Dämmstoffkörper 2 oder 3 entsprechend der Anordnung nach Fig. 2 vorzusehen.

Aus der Fig. 2 wird ferner deutlich, dass an der Kappe 24 eine drehfest an diesem Rohrabschnitt 13 befestigte Kappe über einen Stellantrieb 28 bewegbar ist. Der Stellantrieb 28 ist dazu an der Kappe 23 des äußeren Rohrabschnitts 12 befestigt, welcher seinerseits ortsfest über den äußeren Rohrabschnitt 12 in dein Gehäuse bzw. dem Dämmstoffkörper 2, 3 befestigt ist. Bei einer Drehung des im Ausführungsbeispiel elektrisch betriebenen Stellantriebes 28 wird daher die innere Kappe 24 des inneren Rohrabschnitts 13 in Drehbewegung versetzt, wodurch sich der innere Rohrabschnitt 13 relativ zum äußeren Rohrabschnitt 12 bewegt. Dabei ist vorgesehen, dass auf den Kappen 23, 24 miteinander in Wirkverbindung tretende - hier ebenfalls nicht dargestellte - Hallsensoren, bestehend aus Magneten und diesen zugeordneten Kontaktstelle zur Kennzeichnung der Relativlage der Rohrabschnitte 12, 13 angebracht sind. Hallsensoren sind aufgrund ihrer Ausgestaltung verschleißfrei und im wesentlichen - bei einer Herstellung der Rohrabschnitte 12, 13 aus nicht magnetischem Material - zuverlässig in ihrer Wirkung.

Der Stellantrieb 28 kann beispielsweise dadurch aus einem einfach zu beziehenden und daher kostengünstigen Elektromotor bestehen, der nur eine Laufrichtung, beispielsweise im Uhrzeigersinn, aufweisen muss. Der Stellantrieb 28 muss zum Einstellen einer überlappenden Öffnungslage der Öffnungen 20, 21 mit den Öffnungen 15, 17 aus einer Lage, in der die Öffnungen 18, 19 in Deckungslage mit den Öffnungen 15, 16 befindlich sind um 90° bewegt werden.

In Verbindung mit der Fig. 1 wird dabei auch noch deutlich, dass die Achsen der Rohrabschnitte 12, 13 der Schließvorrichtungen 5, 6 im wesentlichen längs der Förderrichtung der Lüftungsvorrichtung 1 liegen, während hingegen die Förderrichtung innerhalb des Gehäuses, also innerhalb der die Luftkanäle bildenden Dämmstoffkörper 2 und 3 sowie dem Wärmetauscher 4, im wesentlichen quer dazu ausgerichtet sind.

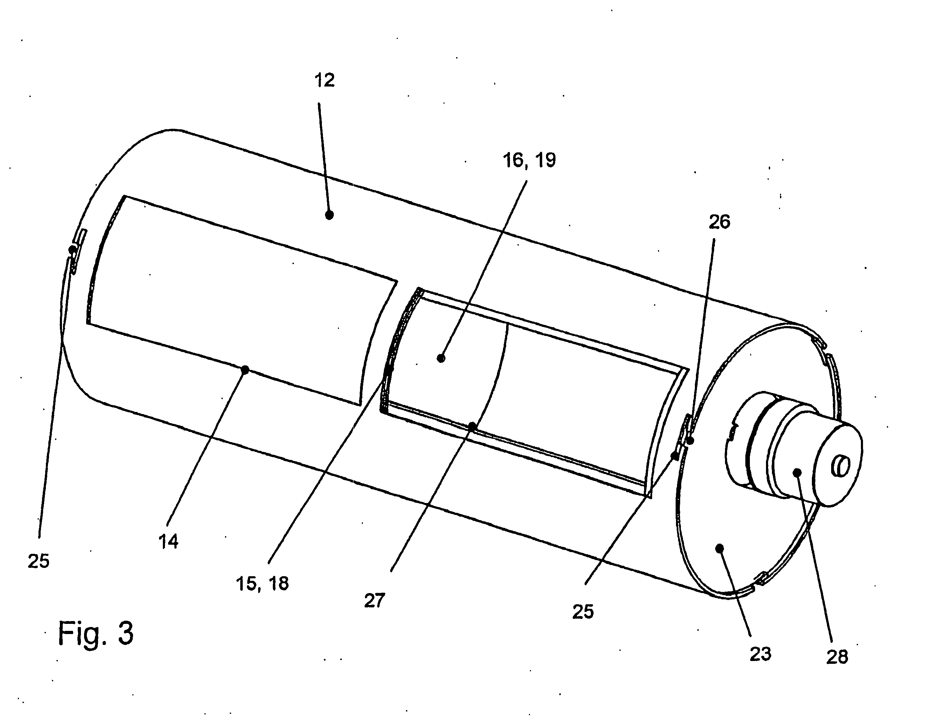

In der Fig. 3 ist in einem vergrößerten Maßstab die Schließvorrichtung 5, 6 dargestellt. Daraus wird insbesondere die Verbindung der Kappen 22, 23 mit dem äußeren Rohrabschnitt 12 über die T-förmigen Öffnungen 25 sowie die darin eingreifenden - hier nicht sichtbaren - Stege 26 deutlich. Dazu sind - wie in Fig. 3 dargestellt - mehrere Öffnungen 25 über die Mantelfläche des äußeren Rohrabschnitts 12 verteilt. Die Öffnungen 25 sind in gleicher Weise auch an dem dem Stellantrieb 28 gegenüberliegenden Ende des äußeren Rohrabschnitts 12 vorgesehen. Bei dem in Fig. 3 dargestellten Ausführungsbeispiel der Schließvorrichtung 5, 6 ist in dem - hier nur teilweise sichtbaren - Rahmen 27 kein Filterelement eingesetzt, ebenso wie in dem in Fig. 2 dargestellten Explosionsmodell. Daher ist bei dem in der Fig.. 3 dargestellten Ausführungsbeispiel die Stellung der Rohrabschnitte 12, 13 sichtbar, bei der sich die diagonalen Öffnungen 19, 18 geöffnet gegenüberliegen.

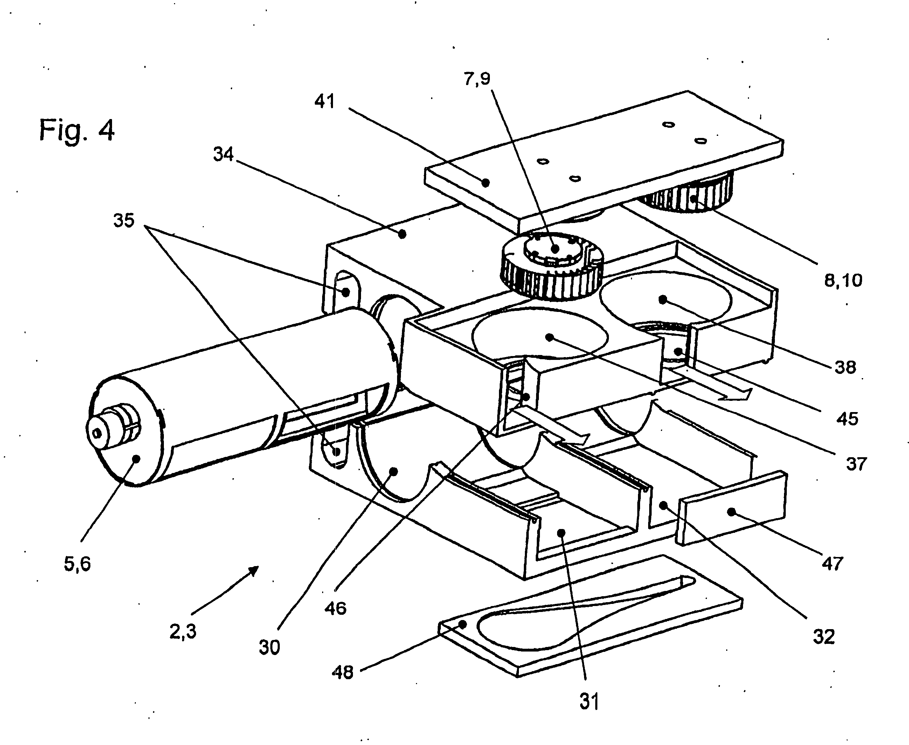

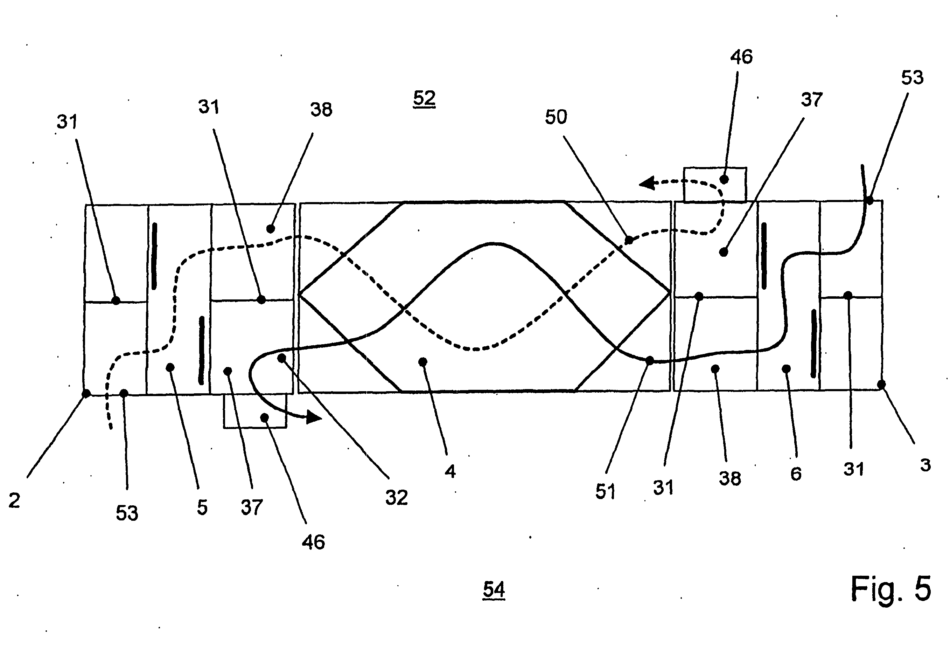

In der Fig. 4 ist der prinzipielle Aufbau eines Dämmstoffkörpers 2 oder 3 dargestellt. Der in einer horizontalen Ebene geteilte Dämmstoffkörper 3 besitzt eine Bohrung 30 zur Aufnahme der Schließvorrichtung 5 bzw. 6. In dem Dämmstoffkörper 2, 3 ist ferner eine längsverlaufende Trennwand 31 vorgesehen, die - mit Ausnahme der querverlaufenden Bohrung 30 - einen ersten Lüftungskanal 32 von einem zweiten Lüftungskanal 33 trennt. Die Trennwand 31 setzt sich daher auch in dem in der Fig. 4 dargestellten hinteren Abschnitt fort, der hinter der Bohrung 30 liegt, wie anhand der später erläuterten Fig. 5 noch deutlich wird.

In dem Abschnitt 34 sind ebenfalls quer verlaufende Kanäle 35, 36 vorgesehen, von dem in der Fig. 4 nur der Kanal 35 sichtbar ist. Ferner sind in dem Dämmstoffkörper 2, 3 zwei nebeneinander liegende Aufnahmen 37, 38 für die Gebläseräder 7, 8 bzw. 9, 10 vorgesehen. Die Gebläseräder 7, 8 bzw. 9, 10 sind dabei auf einer Platte 41 montiert, die in einer flachen Mulde 42 des Dämmstoffkörpers 2, 3 aufnehmbar ist. Der Platte 41 können dabei noch weitere Platten aus Stahl o. ä. beigefügt werden, mittels der das akustische Verhalten der Platte 41 verändert werden kann. Der Dämmstoffkörper 2, 3 ist ferner mit Öffnungen 43, 44, 45 sowie einem vorstehenden Auslass 46 versehen. Die Öffnungen 43, 44, 45 und der Auslass 46 liegen dabei seitlich an dem Dämmstoffkörper 2, 3 wie anhand der Fig. 1 deutlich wird. Die Aufnahme 37 und die Aufnahme 38 weisen dabei im wesentlichen die Form eines Schneckengehäuses auf und bilden dadurch spiralförmige Lüftungsgehäuse für die ansonsten ohne Gehäuse einsetzbaren Gebläseräder 7, 8. Die Aufnahme 37 mündet dabei in dem vorrragenden Auslass 46.

Im dargestellten Ausführungsbeispiel nach Fig. 1 und 4 sind die beiden Aufnahmen 37, 38 je mit einem Gebläserad 7, 8 bzw. 9, 10 ausgestattet. Es kann jedoch abweichend von der Darstellung nach Fig. 1 und 4 vorgesehen werden, dass nur eine der Aufnahmen 37 oder 38 jeweils mit einem Gebläserad 7 oder 8 versehen wird. Dabei ist auch vorgesehen, dass der Lüftungskanal 32 beispielsweise durch Einlegen einer Platte 47 in die Öffnung 44 teilweise verschlossen wird. Dies kann notwendig werden, wenn ein Gebläserad 7 in der Aufnahme 37 angebracht wird, und auch die Aufnahme 38 kein Gebläserad 8 enthält. Wird hingegen kein Gebläse 8 in der Aufnahme 38 vorgesehen, wird die Platte 47 entfernt. Dadurch kann die Lüftungsvorrichtung 1 auch dann verwendet werden, wenn nur ein geringer Volumenstrom gefördert werden soll. Die Aufnahmen 37, 38 sind dabei im wesentlichen so gestaltet, dass die Gebläseräder 7, 8 bzw. 9, 10 in einem oberen Abschnitt der Gesamthöhe des Dämmstoffkörpers 2, 3 angeordnet sind, also nur eine Teilhöhe des Dämmstoffkörpers 2, 3 ausmachen. Die Zufuhr des Volumenstroms erfolgt dabei jeweils in einer Ebene unterhalb der Gebläseräder 7, 8 was beispielsweise durch entsprechende Verengungen der Öffnungen erreicht wird, die in die Aufnahmen 37, 38 münden. Der prinzipielle Aufbau der gesamten Lüftungsvorrichtung 1 wird anhand der Fig. 5, 6 und 7 erläutert.

Unterhalb des Dämmstoffkörpers 2, 3 ist eine Wanne 48 angebracht, welche zur Aufnahme von evtl. anfallendem Kondenzwasser dient. Dieses wird in der flachen Wanne nach innen geführt, um ein Vereisen des äußeren Lüftungsgitters zu verhindern.

In der schematischen Darstellung der Lüftungsvorrichtung 1 nach Fig. 5 wird deutlich, dass die Dämmstoffkörper 2, 3 identisch ausgebildet sind und zwischen sich mittig den Wärmetauscher 4 aufnehmen. Die Dämmstoffkörper 2, 3 sind jeweils um 180° gedreht an den Wärmetauscher 4 angeflanscht. Der Wärmetauscher 4 wird dabei im wesentlichen C-förmig durchströmt, so dass die sich in Längsrichtung des Wärmetauschers 4 ergebenden Lüftungskanäle 50, 51, zum Anschluss an die Lüftungskanäle 32, 33, jeweils in der Ebene des Einlasses auch ihren Auslass haben. Dadurch wird bei einer 180°-Drehung des Dämmstoffkörpers 3 bezüglich des Dämmstoffkörpers 2 eine Zuordnung des Lüftungskanals 32 jeweils zu einem in dem Wärmetauscher 4 befindlichen Lüftungskanal 50 bzw. 51 erreicht. Für den bereits vorstehend erwähnten Betrieb mit nur einem Gebläserad (z.B. 7 und 10) ist es daher beispielsweise möglich, nur in der Aufnahme 37 ein Gebläserad anzuordnen, welches sich aufgrund der Anordnung zumindest in einem entlang des Lüftungskanals 50 befindlichen Abluftstroms und einem entlang des Lüftungskanals 51 befindlichen Zuluftstroms befindet.

Aus den Fig. 5 bis 7 wird ferner deutlich, dass sich die Trennwand 31 längsverlaufend durch den gesamten Dämmstoffkörper 2 und 3 hindurchzieht mit Ausnahme der in Fig. 4 sichtbaren Bohrung 30 zur Aufnahme der Schließvorrichtungen 5, 6. In den Fig. 5 bis 7 sind die jeweiligen verschlossenen Öffnungen 14, 15, 16, 17 mit fett ausgezogenen Strichen dargestellt. In einer ersten Be- und Entlüftungsstellung der Lüftüngsvorrichtung 1 ist dabei vorgesehen, daß von der Gebäudeaußenseite 52 durch eine Einlassöffnung 53 Luft angesaugt und mittels der Stellvorrichtung 6 entlang des mit 51 bezeichneten Lüftungskanals gelenkt wird. Dabei durchströmt der Volumenstrom die Aufnahme 38 und gelangt durch den Lüftungskanal 32 in die Aufnahme 37 des zweiten Dämmstoffkörpers 2. Hier wird der Volumenstrom um nahezu 180° umgelenkt und durch den Auslass 46 auf der Gebäudeinnenseite ausgeblasen. Dem entgegen wird über eine auf der Gebäudeinnenseite vorgesehene Einlassöffnung 53 des Dämmstoffkörpers 2 und die Schließvorrichtung 5 der Lüftungskanal 50 freigegeben, so dass ein in dem ersten Lüftungskanal 32 des Dämmstoffkörpers 3 befindliches Gebläserad (z. B. 7 oder 10) über den an der Gebäudeaußenseite 52 befindlichen Auslass 46 ein Volumenstrom von der Gebäudeinnenseite 54 zur Gebäudeaußenseite 52 bewirken kann. Über den Wärmetauscher 4 ist dabei ein Wärmeaustausch der in dem Lüftungskanal 50 befindlichen Abluft mit der in dem Lüftungskanal 51 befindlichen Zuluft möglich.

Bei der in Fig. 5 dargestellten Be- und Entlüftungsstellung der Schließvorrichtungen 5, 6 wird daher ein annäherndes diagonales Durchströmen der Schließvorrichtungen 5, 6 bewirkt, wobei ggf. auf der Gebäudeaußenseite befindlicher Lärm in Folge der Richtungsänderungen des Volumenstromes gedämpft werden kann. Dabei wird auch deutlich, dass die Rohrabschnitte 12, 13 zur Bildung der Schließvorrichtungen 5, 6 im wesentlichen längs der Förderrichtung liegt, die ja von der Gebäudeaußenseite 52 zur Gebäudeinnenseite 54 erfolgt oder umgekehrt. Innerhalb des Gehäuses sind die Lüftungskanäle 32, 33 bzw. 50, 51 dabei jedoch im wesentlichen quer zur Förderrichtung ausgerichtet.

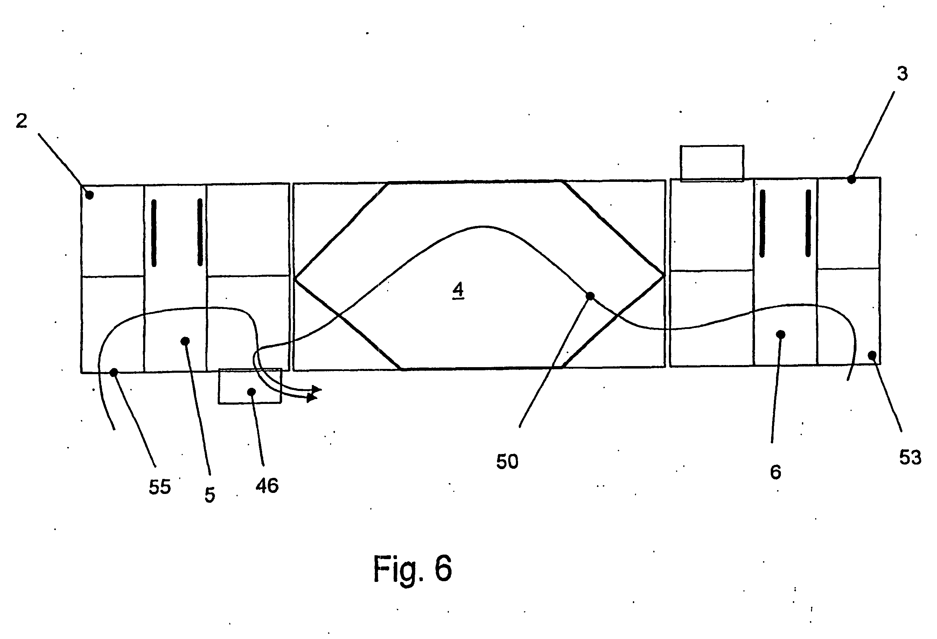

Bei der in Fig. 6 dargestellten Schließstellung der Schließvorrichtungen 5, 6 wird Luft von der Gebäudeinnenseite 54 über die Einlassöffnung 53 des Dämmstoffkörpers 2 und über die Einlassöffnung 55 des Dämmstoffkörpers 5 angesaugt und mittels des Auslasses 46 des Schalldämmkörpers 2 wieder auf der Gebäudeinnenseite 54 ausgeblasen. Bei dieser Stellung der Schließvorrichtungen 5, 6 sind die durch die Schließvorrichtungen 5, 6 und den Dämmstoffkörper 2, 3 gebildeten Lüftungskanäle innerhalb des Gehäuses der Lüftungsvorrichtung 1 mit Ausnahme des Bereiches am Auslass 46 nahezu auf einer Linie liegend, werden also nicht über Kreuz oder über Umlenkungen geführt. Die nach außen tretenden Öffnungen der Lüftungsvorrichtungen 1 sind in dieser Schließstellung der Schließvorrichtungen 5, 6 verschlossen, so dass Außenluft nicht eintreten kann. Von außen auf die Lüftungsvorrichtung 1 auftreffender Lärm wird somit nicht zur Rauminnenseite geführt, was ebenso für die Luft der Gebäudeaußenseite gilt. In dieser Schließstellung der Schließvorrichtungen 5, 6 wird nur ein Teil des Volumenstroms, nämlich der durch die Einlassöffnung 55 des Dämmstoffkörpers 3 eindringender Volumenstrom über den Wärmetauscher 4 geführt. Ein Umluftbetrieb der Lüftungsvorrichtung 1 kann beispielsweise dann sinnvoll sein, wenn innerhalb der Lüftungskanäle 50, 51 oder 32, 33 zusätzliche Maßnahmen zur Behandlung der Luft vorgesehen werden. In jedem Fall wird auf die auf der Gebäudeinnenseite 54 befindliche Luft durch die in den Schließvorrichtungen 5, 6 befindliche Filterelemente hindurchgeführt, was im Falle z.B. eines Pollenschutzfilterelementes zumindest die Beseitigung von in der Raumluft befindlichen Pollen zur Folge hat. Es kann aber auch z.B. eine Heizungseinrichtung im Zuluftbereich vorgesehen werden.

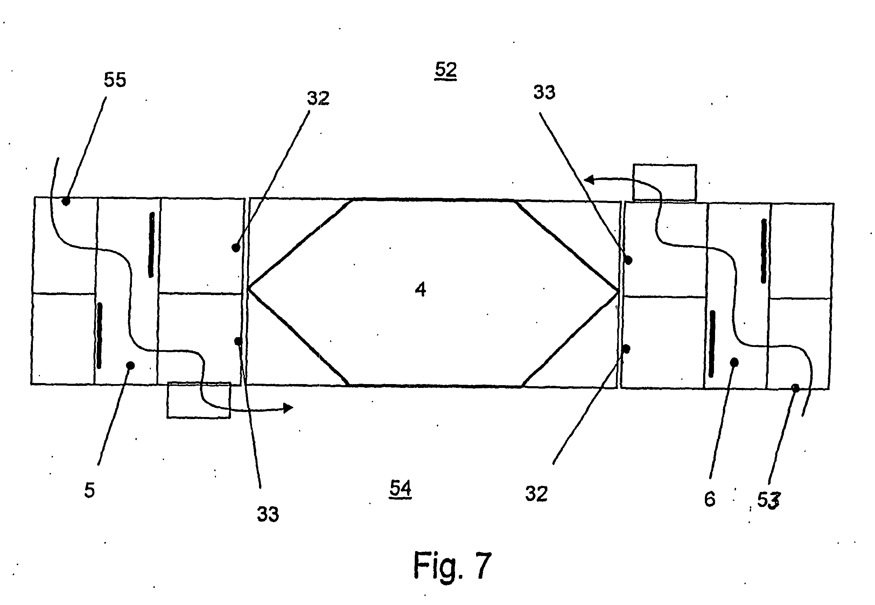

Bei der in Fig. 7 dargestellten Be- bzw. Entlüftungsstellung der Lüftungsvorrichtung 1 ist vorgesehen, dass die zum Wärmetauscher 4 weisenden Lüftungskanäle 32 über die Schließvorrichtungen 5, 6 gegenüber der Gebäudeinnen- bzw. Gebäudeaußenseite 52, 54 abgeschottet werden. Somit kann ein Volumenstrom nur noch innerhalb der Dämmstoffkörper 2, 3 von der Gebäudeaußenseite zur Gebäudeinnenseite bzw. von der Gebäudeinnenseite 54 zur Gebäudeaußenseite 52 gelangen. Auch dabei wird der Volumenstrom innerhalb der Lüftungsvorrichtung 1 mehrmals um 90° umgelenkt und durchströmt die Schließvorrichtungen 5, 6 im wesentlichen diagonal. Auftreffender Schall wird daher weitgehend gedämmt. In dieser Schaltstellung, in der der Wärmetauscher 4 nicht durchströmt wird, sind entsprechende durch den Wärmetauscher 4 bedingte Druckverluste ausgeschaltet. Der in Fig. 7 dargestellte Be- bzw. Entlüftungsbetrieb der Lüftungsvorrichtung 1 eignet sich daher beispielsweise bei annähernd gleichen Raumtemperaturen innerhalb und außerhalb des Gebäudes wie beispielsweise im Sommer vorherschend.

Aus den Fig. 5 bis 7 ergeben sich daher drei mögliche Betriebszustände der Lüftungsvorrichtung 1. In der Fig. 5 ist unter Einbeziehung des Wärmetauschers 4 ein Be- und Entlüftungsbetrieb der Lüftungsvorrichtung 1 einstellbar (Winterbetrieb), während in Fig. 7 der Be- und Entlüftungsbetrieb unter Ausschaltung des Wärmetauschers 4 stattfindet (Sommerbetrieb). Bei dem in Fig. 6 dargestellten Betriebszustand der Lüftungsvorrichtung, dem Umluftbetrieb, ist hingegen eine teilweise Miteinbeziehung des Wärmetauschers 4 vorgesehen, der jedoch in diesem Falle keine wärmetauschende Funktion ausübt, da der Lüftungskanal 51 nicht von einem Volumenstrom mit einer anderen Temperatur als in dem Lüftungskanal 50 befindlichen durchströmt wird.

Aus den Fig. 5 und 7 wird darüber hinaus deutlich, dass die Schließvorrichtung 5, 6 zueinander um 180° verdrehte innere Rohrabschnitte 13 aufweisen. Um also ausgehend von dem Winterbetrieb in den Sommerbetrieb zu gelangen werden die Rohrabschnitte 13 um 180° gedreht. Neben den genannten Schaltstellungen nach Fig. 5 bis 7 ist es selbstverständlich auch möglich, zusätzlich eine Position der Schließvorrichtungen 5, 6 vorzusehen, in der alle Öffnungen 14, 15, 16, 17 verschlossen sind und gleichzeitig die Gebläseräder nicht angetrieben werden. Dabei ist die Lüftungsvorrichtung 1 praktisch außen verschlossen, so dass kalte Außenluft nicht bis an den Innenbereich der Lüftungsvorrichtung 1 heranreicht. Dies verbessert die Wärmedämmung und vermeidet Kondensat in bzw. an der Lüftungsvorrichtung 1.

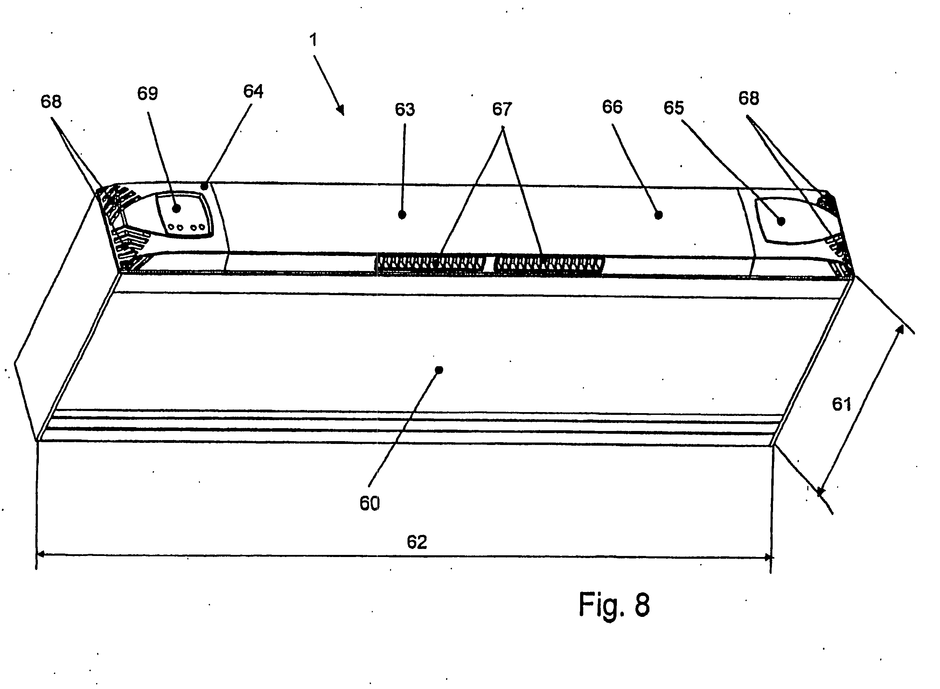

In der Fig. 8 ist schließlich das Gehäuse 60 der Lüftungsvorrichtung dargestellt. Das Gehäuse 60 besteht dabei im wesentlichen aus über Verbindungselemente miteinander koppelbarer Platten die in bekannter Weise aus der DE 44 22 862 A1 - auf die vollinhaltlich Bezug genommen wird - zusammensetzbar sind. Dabei ist es möglich, dass die Tiefe 61 aber auch die Länge 62 des Gehäuses 60 an bauliche Gegebenheiten des Gebäudes angepasst werden. Dazu ist die Frontplatte 63 im wesentlichen dreigeteilt und besteht aus den Endkappen 64 und 65 sowie dem Profil 66. Mittig an dem Profil 66 sind dabei die dem Auslass 46 zugeordneten Lüftungsschlitze 67 vorgesehen, während die auf der Gebäudeinnenseite liegenden Einlassöffnungen 53, 55 durch entsprechende Lüftungsschlitzes 68 in den Endkappen 64, 65 mit der Gebäudeinnenseite 54 verbunden sind. Zusätzlich ist an der Endkappe 64 ein Bedienpaneel 69 vorgesehen, mit dem sich die verschiedenen Be- und Entlüftungsschaltstellungen der Lüftungsvorrichtung 1 einstellen lassen.

Um die Länge 62 des Gehäuses 60 manipulieren zu können ist dabei vorgesehen, dass zwischen dem Wärmetauscher 4 und den Dämmstoffkörpem 2 Verbindungsstücke angebracht werden können, die im wesentlichen zwei Lüftungskanäle bereitstellen und an die Öffnungen 43, 44, 45 der Dämmstoffkörper 2 bzw. 3 sowie diesen zugeordneten Öffnungen des Wärmetauschers 4 kuppelbar sind. Dabei kann natürlich auch vorgesehen werden, dass die die Lüftungskanäle innerhalb dieses Zwischenstücks trennende Wand wärmeleitfähig ausgebildet ist, so dass die wirksame Länge des Wärmetauschers 4 durch das Einsetzen des Zwischenstücks verlängert wird.

Abschließend sei auch noch darauf hingewiesen, dass die Dämmstoffkörper 2 und 3 vorzugsweise aus Polystyrol herzustellen sind, da diese Werkstoffe einerseits eine relativ gute Wärmedämmung gewährleisten und andererseits wirksam zur Vermeidung von Vibrationen der Gebläseräder beitragen.

### Bezugszeichenliste

- 1: Lüftungsvorrichtung
- 2: Dämmstoffkörper
- 3: Dämmstoffkörper
- 4: Wärmetauscher
- 5: Schließvorrichtung
- 6: Schließvorrichtung
- 7: Gebläserad
- 8: Gebläserad
- 9: Gebläserad
- 10: Gebläserad
- 11: -
- 12: äußerer Rohrabschnitt
- 13: innerer Rohrabschnitt
- 14: Öffnung
- 15: Öffnung
- 16: Öffnung
- 17: Öffnung
- 18: Öffnung
- 19: Öffnung
- 20: Öffnung
- 21: Öffnung
- 22: Kappe
- 23: Kappe
- 24: Kappe
- 25: Öffnung
- 26: Steg
- 27: Rahmen
- 28: Stellantrieb
- 29 30: Bohrung
- 31: Trennwand
- 32: Lüftungskanal
- 33: Lüftungskanal
- 34: Abschnitt
- 35: Kanal
- 36: Kanal
- 37: Aufnahme
- 38: Aufnahme
- 39 40 41: Platte
- 42: Mulde
- 43: Öffnung
- 44: Öffnung
- 45: Öffnung
- 46: Auslass
- 47: Platte
- 50: Lüftungskanal
- 51: Lüftungskanal
- 52: Gebäudeaußenseite
- 53: Einlassöffnung
- 54: Gebäudeinnenseite
- 55: Einlassöffnung
- 60: Gehäuse
- 61: Tiefe
- 62: Länge
- 63: Frontplatte
- 64: Endkappe
- 65: Endkappe
- 66: Profil
- 67: Lüftungsschlitz
- 68: Lüftungsschlitz

## Patentansprüche

1. Lüftungsvorrichtung (1)
mit einem Gehäuse (60), welcher zwei Lüftungskanäle ausbildet, der über eine Schließvorrichtung (5, 6) zur Einstellung verschiedener Be- und Entlüftungsstellungen verfügt, wobei
die Schließvorrichtung (5, 6) aus zwei koaxial verlaufenden zylindrischen, ineinander liegenden Rohrabschnitten (12, 13) besteht, deren Mantelflächen mit über den Umfang verteilten, in Deckungslage bringbaren Öffnungen (14, 17; 18, 19; 20, 21) versehen sind, und der äußere Rohrabschnitt (12) die Lagerung des darin drehbeweglich aufgenommenen inneren Rohrabschnitts (12) bildet.
**dadurch gekennzeichnet**,
das in dem Gehäuse (60) ein Wärmetauscher (4) der zwei Lüftungskanäle ausbildet, zwischen zwei die Schließvorrichtung (5, 6) und eine Zwangslüftungsvorrichtung aufnehmenden identischen, um 180° zueinander gedreht angeordneten Dämmstoffkörpem (2, 3) liegt, die jeweils zwei Lüftungskanäle (32, 33) bereitstellten.

2. Lüftungsvorrichtung nach Anspruch 1,
**dadurch gekennzeichnet,**
**dass** der äußere Rohrabschnitt (12) durch ein in dem Gehäuse (60) zu befestigendes Rohr gebildet wird.

3. Lüftungsvorrichtung nach einem der Ansprüche 1 bis 2,
**dadurch gekennzeichnet,**
**dass** die Achse der Rohrabschnitte (12, 13) im wesentlichen längs der Förderrichtung liegt, wobei die Lüftungskanäle (32, 33, 50, 51) innerhalb des Gehäuses (60) im wesentlichen quer dazu verläuft.

4. Lüftungsvorrichtung nach einem der Ansprüche 2 bis 3,
**dadurch gekennzeichnet,**
**dass** der äußere Rohrabschnitt (12) in dem Dämmstoffkörper (2, 3) aufgenommen ist.

5. Lüftungsvorrichtung nach einem der Ansprüche 1 bis 4,
**dadurch gekennzeichnet,**
**dass** die Längsenden des äußeren Rohrabschnitts (12) mit Kappen (22, 23) verschlossen sind, die mittels bajonettartiger Verschlüsse (25, 26) befestigt sind.

6. Lüftungsvorrichtung nach einem der Ansprüche 1 bis 5,
**dadurch gekennzeichnet,**
**dass** in den Rohrabschnitten (12, 13) ein Filterelement aufgenommen ist.

7. Lüftungsvorrichtung nach Anspruch 6,
**dadurch gekennzeichnet,**
**dass** das Filterelement an der Kappe (22) befestigt ist.

8. Lüftungsvorrichtung nach Anspruch 7,
**dadurch gekennzeichnet,**
**dass** die das Filterelement tragende Kappe (22) zur Gebäudeinnenseite (54) weist

9. Lüftungsvorrichtung nach einem der Ansprüche 5 bis 8,
**dadurch gekennzeichnet,**
**dass** die an dem inneren Rohrabschnitt (13) endseitig eine drehfest mit dem Rohrabschnitt (13) verbundene Kappe (24) mit einem Stellantrieb (28) verbunden ist.

10. Lüftungsvorrichtung nach Anspruch 9,
**dadurch gekennzeichnet,**
**dass** der Stellantrieb (28) an der Kappe (23) des äußeren Rohrabschnitts (12) befestigt ist.

11. Lüftungsvorrichtung nach einem der Ansprüche 9 oder 10,
**dadurch gekennzeichnet,**
**dass** der Stellantrieb (28) elektrisch betrieben ist und auf den Kappen (23, 24) Hallsensoren zur Kennzeichnung der Stellung des Rohrabschnitts (13) angebracht sind.

12. Lüftungsvorrichtung nach Anspruch 1,
**dadurch gekennzeichnet,**
**dass** der äußere Rohrabschnitt (12) vier Öffnungen (14, 15, 16, 17) aufweist, die sich paarweise und längs der Drehachse verschoben gegenüberliegen.

13. Lüftungsvorrichtung nach einem der Ansprüche 1 oder 12,
**dadurch gekennzeichnet,**
**dass** der innere Rohrabschnitt (13) vier Öffnungen (18, 19, 20, 21) aufweist, von denen zwei (18, 19) bezüglich der Drehachse einander längsverschoben und zwei Öffnungen (20, 21) senkrecht zur Drehachse gegenüberliegen.

14. Lüftungsvorrichtung nach Anspruch 1,
**dadurch gekennzeichnet,**
**dass** der Wärmetauscher (4) im wesentlichen C-förmig durchströmt wird.

15. Lüftungsvorrichtung nach einem der Ansprüche 1 bis 14,
**dadurch gekennzeichnet,**
**dass** die Dämmstoffkörper (2, 3), mit Ausnahme der querverlaufenden Bohrung (30) zur Aufnahme der Rohrabschnitte (12, 13), eine längsverlaufende Trennwand (31) aufweisen.

16. Lüftungsvorrichtung nach Anspruch 15,
**dadurch gekennzeichnet,**
**dass** der Dämmstoffkörper (2, 3) zwei nebeneinanderliegende Aufnahmen (37, 38) für Gebläseräder (7, 8; 9, 10) aufweist, die in einer flachen Mulde (42) des Dämmstoffkörpers (2, 3) liegen, wobei die Gebläseräder auf einer in der Mulde (42) eingebetteten Platte (41) befestigt sind.

17. Lüftungsvorrichtung nach einem der Ansprüche 1 bis 16,
**dadurch gekennzeichnet,**
**dass** eine der Aufnahmen (37) für die Gebläseräder (7, 8; 9, 10) in einen vorragenden querverlaufenden Auslass (46) mündet.

18. Lüftungsvorrichtung nach Anspruch 17,
**dadurch gekennzeichnet,**
**dass** Dämmstoffkörper (2, 3) und Wärmetauscher (4) in dem Gehäuse (60) angeordnet sind und dass das Gehäuse (60) endseitig und mittig angebrachte Lüftungsschlitze (67, 68) aufweist, wobei die mittig angebrachten Lüftungsschlitze (67) dem Auslass (46) zugeordnet sind.

## Claims

1. Ventilating device (1) having a housing (60), said housing forming two ventilating ducts and having a closing device (5, 6) for selecting various air feed and removal settings, whereby the closing device (5, 6) comprises two coaxially arranged cylindrical pipe sections (12, 13) one lying within the other, whose outer surfaces are provided, distributed over their periphery, with openings (14, 17; 18, 19; 20, 21) able to be brought into coincidence, and the outer pipe section (12) comprises the bearing of the inner pipe section (13) which is rotatably accommodated within it, **characterised in that** in the housing (60), a heat exchanger (4) forming two ventilating ducts lies between two identical elements made of insulating material (2, 3) accommodating the closing device (5, 6) and a forced-air ventilating device, said elements made of insulating material being arranged rotated through 180° to each other and each providing two ventilating ducts (32, 33).

2. Ventilating device according to claim 1, **characterised in that** the outer pipe section (12) is formed by a pipe to be fixed in the housing (60).

3. Ventilating device according to one of the claims 1 to 2, **characterised in that** the axis of the pipe sections (12, 13) lies substantially along the feed direction, whereby the ventilating ducts (32, 33, 50, 51) within the housing (60) run substantially transversely to this.

4. Ventilating device according to one of the claims 2 to 3, **characterised in that** the outer pipe section (12) is accommodated in the element made of insulating material (2, 3).

5. Ventilating device according to one of the claims 1 to 4, **characterised in that** the longitudinal ends of the outer pipe section (12) are closed with caps (22, 23) fastened with bayonet-type closures (25, 26).

6. Ventilating device according to one of the claims 1 to 5, **characterised in that** a filter element is accommodated in the pipe sections (12, 13).

7. Ventilating device according to claim 6, **characterised in that** the filter element is attached to the cap (22).

8. Ventilating device according to claim 7, **characterised in that** the cap (22) bearing the filter element faces towards the building's interior (54).

9. Ventilating device according to one of the claims 5 to 8, **characterised in that** on the end of the inner pipe section (13), a cap (24) fixed in a non-rotatable manner to the pipe section (13) is linked to an actuating drive (28).

10. Ventilating device according to claim 9, **characterised in that** the actuating drive (28) is attached to the cap (23) of the outer pipe section (12).

11. Ventilating device according to one of the claims 9 or 10, **characterised in that** the actuating drive (28) is electrically operated and that Hall effect sensors are mounted on the caps (23, 24) to identify the position of the pipe section (13).

12. Ventilating device according to claim 1, **characterised in that** the outer pipe section (12) has four openings (14, 15, 16, 17) which lie in pairs mutually opposed and displaced along the rotation axis.

13. Ventilating device according to one of the claims 1 or 12, **characterised in that** the inner pipe section (13) has four openings (18, 19, 20, 21) of which two (18, 19) oppose each other longitudinally displaced in relation to the rotation axis and two openings (20, 21) oppose each other perpendicular to the rotation axis.

14. Ventilating device according to claim 1, **characterised in that** the flow through the heat exchanger (4) is substantially C-shaped.

15. Ventilating device according to one of the claims 1 to 14, **characterised in that** the elements made of insulating material (2, 3), with the exception of the transversely arranged bore (30) to accommodate the pipe sections (12, 13), have a longitudinal separating wall (31).

16. Ventilating device according to claim 15, **characterised in that** the element made of insulating material (2, 3) has two adjoining receptacles (37, 38) for impellers (7, 8; 9, 10), which lie in a flat trough (42) in the damping material body (2, 3), whereby the impellers are attached to a plate (41) embedded in the trough (42).

17. Ventilating device according to one of the claims 1 to 16, **characterised in that** one of the receptacles (37) for the impellers (7, 8; 9, 10) opens into a projecting transversely arranged outlet (46).

18. Ventilating device according to claim 17, **characterised in that** elements made of insulating material (2, 3) and heat exchangers (4) are arranged in the housing (60) and that the housing (60) has ventilation slits (67, 68) arranged at the end and centrally, whereby the centrally arranged ventilation slits (67) are assigned to the outlet (46).

## Revendications

1. Dispositif de ventilation (1) avec une carcasse (60) qui forme deux canaux de ventilation, qui servent à établir diverses dispositions d'aspiration et de refoulement d'air, par l'intermédiaire d'un dispositif de fermeture (5, 6), dans lequel le dispositif de fermeture (5, 6) se compose de deux sections de tubes (12, 13) s'étendant coaxialement, cylindriques, situées l'une dans l'autre, dont les enveloppes sont pourvues d'ouvertures (14, 17; 18, 19; 20, 21) réparties à la périphérie, pouvant être amenées en position de recouvrement, et la section de tube externe (13) forme le berceau de la section de tube interne (12) qui y est reçue à pivotement, **caractérisé en ce que**
un échangeur de chaleur (4) qui forme les deux canaux de ventilation dans la carcasse (60), est disposé entre deux éléments d'insonorisation (2, 3) identiques, disposés tournés de 180° l'un par rapport à l'autre, recevant le dispositif de fermeture (5, 6) et un dispositif de ventilation mécanique forcée, qui forment chacun deux canaux de ventilation (32, 33).

2. Dispositif de ventilation selon la revendication 1, **caractérisé en ce que** la section de tube externe (12) est formée par un tube à fixer dans la carcasse (60).

3. Dispositif de ventilation selon l'une des revendications 1 et 2, **caractérisé en ce que** l'axe des sections de tubes (12, 13) est situé sensiblement le long de la direction de passage, le canal de ventilation (32, 33, 50, 51) s'étendant sensiblement perpendiculairement à celui-ci à l'intérieur de la carcasse (60).

4. Dispositif de ventilation selon l'une des revendications 2 et 3, **caractérisé en ce que**
la section de tube externe (12) est reçue dans l'élément d'insonorisation (2, 3).

5. Dispositif de ventilation selon l'une des revendications 1 à 4, **caractérisé en ce que** les extrémités longitudinales de la section de tube externe (12) sont fermées par des couvercles (22, 23) qui sont fixés au moyen de dispositifs à baïonnette (25, 26).

6. Dispositif de ventilation selon l'une des revendications 1 à 5, **caractérisé en ce que** un élément filtrant est reçu dans les sections de tubes (12, 13).

7. Dispositif de ventilation selon la revendication 6, **caractérisé en ce que** l'élément filtrant est fixé au couvercle (22).

8. Dispositif de ventilation selon la revendication 7, **caractérisé en ce que** le couvercle (22) portant l'élément filtrant pointe vers le côté interne (54) de la construction.

9. Dispositif de ventilation selon l'une des revendications 5 à 8, **caractérisé en ce que** le couvercle (24) à une extrémité de la section de tube (13), relié solidairement en rotation à la section de tube interne (13), est pourvu d'un actionneur (28).

10. Dispositif de ventilation selon la revendication 9, **caractérisé en ce que** l'actionneur (28) est fixé au couvercle (23) de la section de tube externe (12).

11. Dispositif de ventilation selon la revendication 9 ou 10, **caractérisé en ce que** l'actionneur (28) est entraîné électriquement, et des détecteurs à effet Hall pour caractériser la position de la section de tube (13) sont agencés sur les couvercles (23, 24).

12. Dispositif de ventilation selon la revendication 1, **caractérisé en ce que** la section de tube externe (12) présente quatre ouvertures (14, 15, 16, 17) qui sont opposées les uns aux autres par paires, et décalées le long de l'axe de rotation.

13. Dispositif de ventilation selon l'une des revendications 1 et 12, **caractérisé en ce que** la section de tube interne (13) présente quatre ouvertures (18, 19, 20, 21), dont deux (18, 19) sont décalées longitudinal par rapport à l'axe de rotation, et deux ouvertures (20, 21) sont opposées perpendiculairement à l'axe de rotation.

14. Dispositif de ventilation selon la revendication 1, **caractérisé en ce que** l'échangeur de chaleur (4) est traversé par un flux sensiblement en C .

15. Dispositif de ventilation selon l'une des revendications 1 à 14, **caractérisé en ce que** les éléments d'insonorisation (2, 3), à l'exception de l'alésage (30) perpendiculaire, pour recevoir les sections de tubes (12, 13), présentent une paroi de séparation (31) s'étendant longitudinalement.

16. Dispositif de ventilation selon la revendication 15, **caractérisé en ce que** l'élément d'insonorisation (2, 3) présente deux logements (37, 38) disposés côté à côte pour des roues de ventilateurs (7, 8; 9, 10) qui sont disposées dans une cuvette plate (42) de l'élément d'insonorisation (2, 3), les roues de ventilateurs étant fixées à une plaque (41) noyée dans la cuvette (42).

17. Dispositif de ventilation selon l'une des revendications 1 à 16, **caractérisé en ce que** l'un des logements (37) pour les roues de ventilateurs (7, 8; 9, 10) débouche dans un échappement (46) perpendiculaire, en saillie.

18. Dispositif de ventilation selon la revendication 17, **caractérisé en ce que** des éléments d'insonorisation (2, 3) et un échangeur de chaleur (4) sont agencés dans la carcasse (60), et **en ce que** la carcasse (60) présente des fentes de ventilation (67, 68) disposées à une extrémité, et au milieu, les fentes de ventilation (67) disposées au milieu étant associées à l'échappement (46).
